# EUROPÄISCHE PATENTSCHRIFT

(11) **EP 3 363 106 B1**
(45) Veröffentlichungstag und Bekanntmachung des Hinweises auf die Patenterteilung: **03.04.2019**
(21) Anmeldenummer: 17791046.0
(22) Anmeldetag: 23.10.2017
(51) Int. Cl.: H02K 15/04

(54) **POSITIONIERVORRICHTUNG ZUM POSITIONIEREN VON KUPFERSTÄBEN UND VERFAHREN**
DEVICE FOR POSITIONING COPPER RODS, AND METHOD
DISPOSITIF DE POSITIONNEMENT POUR POSITIONNER DES BARRES DE CUIVRE ET PROCÉDÉ

(30) Priorität: 28.10.2016 DE 102016221355
(43) Veröffentlichungstag der Anmeldung: 22.08.2018
(73) Patentinhaber: ThyssenKrupp System Engineering GmbH, 74076 Heilbronn (DE); thyssenkrupp AG, 45143 Essen (DE)
(72) Erfinder: WALTER, Andreas, 28790 Schwanewede (DE)
(74) Vertreter: thyssenkrupp Intellectual Property GmbH
(86) Internationale Anmeldenummer: PCT/EP2017/077024
(87) Internationale Veröffentlichungsnummer: WO 2018/077812

(56) Entgegenhaltungen:
- WO-A1-2012/014233
- WO-A1-2016/005076

## Beschreibung

Die Erfindung betrifft eine Positioniervorrichtung zum umfänglichen Positionieren einer Mehrzahl an Kupferstäben um eine Mittelachse M, die eine Axialrichtung beschreibt, wobei die Kupferstäbe im Wesentlichen U-förmig mit einem ersten Schenkelabschnitt und einem zweiten Schenkelabschnitt ausgeformt sind.

Bei der Herstellung von elektrischen Maschinen, beispielsweise Elektromotoren oder Generatoren, geht es darum, den Montageprozess zu vereinfachen und gleichzeitig die Qualitätsparameter während des Montageprozesses zu verbessern. Hierbei ist zwischen in Wicklungs-Technologie hergestellten oder in Hair-Pin-Technologie hergestellten Statorelementen bzw. Rotorelementen zu unterscheiden. Die Hair-Pin-Technologie bietet die Möglichkeit die Leistungsdichte von Elektromotoren, die in Kraftfahrzeugen zum Einsatz kommen sollen, zu erhöhen. Bei der Hair-Pin-Technologie werden speziell gebogene Kupferstäbe, die wegen ihrer Form als Hair-Pins bezeichnet werden, in axial verlaufende und innenumfänglich oder außenumfänglich angeordnete Aufnahmenuten des Statorelements bzw. Rotorelements eingeführt. In diesem Zusammenhang sind als Dokumente zum Stand der Technik die WO 2012/014233 A1 und die WO 2016/005076 A1 zu nennen.

Im Verlauf der nachfolgenden Beschreibung wird der Begriff Kupferstab verwendet und auf den englischen Begriff Hair-Pin verzichtet. Ein Kupferstab im Sinne dieser Beschreibung ist bevorzugt U-förmig gebogen, so dass er zwei im Wesentlichen parallele Schenkelabschnitte aufweist, die von einem Querabschnitt miteinander verbunden werden. Die Länge dieses Querabschnittes bestimmt die sogenannte Spannweite des Kupferstabes, die demnach den Abstand der beiden Schenkelabschnitte zueinander angibt. Die beiden Schenkelabschnitte sind im montierten Zustand der Kupferstäbe in die Aufnahmenuten des Statorelements bzw. Rotorelements eingeführt. Die beschriebene Biegung beziehungsweise Form des Kupferstabes bedingt, dass in einer Axialansicht betrachtet die beiden Schenkelabschnitte parallel zu der Mittelachse M in den Aufnahmenuten einsitzen, allerdings auf unterschiedlichen Durchmesser bezogen auf die Mittelachse M. Dadurch, dass die beiden Schenkelabschnitte eines Kupferstabes auf unterschiedlichen Durchmessern liegen, kommt es zu einer Überlappung von benachbart in das Statorelement bzw. Rotorelement eingeführten Kupferstäben. Um für die herzustellende elektrische Maschine unterschiedliche Schaltbilder realisieren zu können, werden Kupferstäbe mit unterschiedlichen Spannweiten oder Kupferstäbe mit einheitlichen Spannweiten verwendet. Allerdings gilt grundsätzlich, dass die Spannweiten ein Vielfaches der umfänglichen Abstände - bezogen auf die Mittelachse M - des Statorelements bzw. Rotorelements - der Aufnahmenuten betragen.

In jüngster Zeit werden verstärkt Anstrengungen unternommen die Hair-Pin-Technologie von einer überwiegend händischen oder auch halbautomatischen Fertigung hin zu einer weitestgehend automatisierten Fertigung zu entwickeln. Diese Montagemethoden sind sehr zeitaufwändig. Aufgrund der hohen Anforderungen an die Positionsgenauigkeit der Bauteile verbunden mit geringen Bauteiltoleranzen führt eine händisch bzw. halbautomatische Fertigung zu hohen Taktzeiten und mit einer gewissen Wahrscheinlichkeit zu Beschädigungen der Bauteile, was eine hohe Ausschussrate zur Folge hat. Rotorelemente in Hair-Pin-Technologie herzustellen ist bereits seit geraumer Zeit bekannt, wie dies beispielsweise die US 1 555 931 beschreibt. Weiterhin ist in der US 1 661 344 eine Montagevorrichtung beschrieben, um Rotorelemente in Hair-Pin-Technologie herzustellen, wobei hiermit höchstens eine halbautomatische Montage durchgeführt werden kann. Strukturell betrachtet kann der Montageprozess unterteilt werden in
1. eine Vorpositionierung, bei der es zunächst gilt, die einzelnen Kupferstäbe sowohl relativ zueinander als auch insgesamt umfänglich anzuordnen,
2. eine Montagevorbereitung mittels einer Montagevorrichtung, der die Kupferstäbe in der vorpositionierten Anordnung übergeben werden und
3. den eigentlichen Montagevorgang, in dem die Kupferstäbe mittels der Montagevorrichtung in das zu bestückende Statorelement bzw. Rotorelement eingeführt werden.

Da es bei dem Montagevorgang dann zu einer kurzen Taktzeit kommt, wenn möglichst viele Kupferstäbe gleichzeitig in die entsprechenden Aufnahmenuten des Statorelements bzw. Rotorelements eingeführt werden, wäre es wünschenswert bereits bei der Vorpositionierung eine möglichst einfache Handhabung der Kupferstäbe sicherzustellen. Eine hierfür verwendete Vorrichtung muss demnach ein einfaches und beschädigungsfreies Anordnen der Kupferstäbe ermöglichen, also auch dem Umstand Rechnung tragen, dass sich benachbarte Kupferstäbe in ihrer vorpositionierten und auch montierten Anordnung gegenseitig überlappen können. Weiterhin müssen Kupferstäbe unterschiedlicher Spannweite montierbar sein. Weiterhin muss eine Positioniervorrichtung sowohl für ein manuelles als auch für ein automatisiertes Bestücken mit Kupferstäben geeignet sein.

Ausgehend hiervon besteht die Aufgabe der vorliegenden Erfindung darin, eine Vorrichtung bereitzustellen, die den ersten Schritt der Vorpositionierung in dem gesamten Montageprozess unterstützt und dabei den skizzierten Anforderungen Rechnung trägt.

Die Aufgabe wird gelöst durch eine Positioniervorrichtung zum umfänglichen Positionieren einer Mehrzahl an Kupferstäben um eine Mittelachse M, die eine Axialrichtung beschreibt, wobei die Kupferstäbe im Wesentlichen U-förmig mit einem ersten Schenkelabschnitt und einem zweiten Schenkelabschnitt ausgeformt sind, mit
einem Positionierkörper, der mit einer Außenumfangsfläche konzentrisch um die Mittelachse M angeordnet ist,
einem Drehkörper, der koaxial um den Positionierkörper drehbar angeordnet ist,
wobei der Positionierkörper auf der Außenumfangsfläche in Axialrichtung verlaufende Aufnahmenuten zur jeweiligen Aufnahme eines der Schenkelabschnitte eines Kupferstabes ausbildet und der Drehkörper nach Innen in Richtung der Mittelachse A offene Führungsgassen zur Aufnahme des anderen Schenkelabschnittes des jeweiligen Kupferstabes ausbildet,
wobei Verriegelungsmittel vorgesehen sind, um den Schenkelabschnitt des Kupferstabes um eine zur Mittelachse M parallele Schwenkachse S schwenkbar in der jeweiligen Aufnahmenut des Positionierkörpers zu halten und
wobei ein Drehantriebsmechanismus zum Aufprägen einer Drehung auf den Drehkörper relativ zum Positionierkörper vorgesehen ist, um durch Drehung des Drehkörpers die in den Führungsgassen des Drehkörpers aufgenommenen Schenkelabschnitte nach Innen in Richtung der Mittelachse M in die Aufnahmenuten des Positionierkörpers zu schwenken.

Erfindungsgemäß ist vorgesehen, dass die Positioniervorrichtung die Kupferstäbe zwischen Bestückungsposition und montagefähiger Entnahmeposition bewegen kann, wobei dieses Bewegen vorteilhaft in einer Schwenkbewegung besteht. Weiterhin vorteilhaft erfolgt diese Schwenkbewegung um die in der Aufnahmenut des Positionierkörpers gehaltenen Schenkelabschnitte. Hierdurch wird erreicht, dass sich die Kupferstäbe vor Ausführen der Schwenkbewegung nicht überlappen, so dass die Positioniervorrichtung überwiegend in Axialrichtung mit den Kupferstäben bestückt werden kann, ohne dass sich die Kupferstäbe gegenseitig behindert bzw. miteinander kollidieren. Durch die Schwenkbewegung, die erfindungsgemäß durch den Drehantriebsmechanismus eingeleitet wird, werden alle Kupferstäbe zeitgleich vorpositioniert, so dass sie hiervon ausgehend beispielsweise einer im Montageprozess nachfolgenden Montagevorrichtung zugeführt werden können. Hierbei ist es unschädlich, dass sich zumindest benachbarte Kupferstäbe überlappen. Erfindungsgemäß ist vorgesehen, dass die Positioniervorrichtung zwischen einer Grundstellung, in der die Positioniervorrichtung mit den Kupferstäben bestückt wird, und einer Endstellung, in der Positioniervorrichtung die Kupferstäbe in der beschriebenen sich teilweise überlappenden und im Wesentlichen umfänglichen Anordnung hält, bewegbar ist.

Eine vorteilhafte Ausgestaltung der Erfindung sieht vor, dass die Führungsgassen zu einer axialen Seite des Drehkörpers geschlossen sind. Hierdurch wird erreicht, dass die Kupferstäbe zu dieser axialen Seite der Führungsgassen hin beim Bestücken der Positioniervorrichtung eine definierte Position einnehmen können.

Eine vorteilhafte Ausgestaltung der Erfindung sieht vor, dass der Drehkörper eine Montagescheibe und eine Drehantriebsscheibe umfasst, wobei die Führungsgassen in der Montagescheibe ausgebildet sind. Hierdurch bietet sich die Möglichkeit einer einfachen Fertigung der Führungsgassen in der Montagescheibe. Insbesondere kann vorgesehen sein, dass die Montagescheibe und die Drehantriebsscheibe konzentrisch und axial benachbart zueinander angeordnet sind. Hierdurch ist es vorteilhaft möglich, die der Montagescheibe zugewandte Stirnfläche der Drehantriebsscheibe als Begrenzung der Führungsgassen zu nutzen. Somit kann eine konkreten Ausgestaltung der Erfindung vorsehen, dass eine der Montagescheibe zugewandte axiale Stirnseite der Drehantriebsscheibe eine axiale Anlagefläche für die in den Führungsgassen der Montagescheibe aufgenommenen Schenkelabschnitte der Kupferstäbe ausbildet.

Eine vorteilhafte Ausgestaltung der Erfindung sieht vor, dass der Drehkörper über die Drehantriebsscheibe auf einem Grundkörper der Vorpositioniervorrichtung drehbar gehalten ist. Hierdurch wird über den Grundkörper ein feststehendes Bauteil bereitgestellt, über welches die gesamte Positioniervorrichtung bei Bedarf transportiert oder auch mit anderen gleichartigen Positioniervorrichtungen zu einem Verbund zusammengeschlossen werden kann.

Eine vorteilhafte Ausgestaltung der Erfindung sieht vor, dass die Verriegelungsmittel einen gegenüber dem Grundkörper und der Drehantriebsscheibe drehbar gelagerten Verriegelungskorb mit axial gerichteten Sperrstäben umfassen. Über einen drehbar gelagerten Verriegelungskorb ist es vorteilhaft möglich, einfach und schnell zwischen einer verriegelten Stellung und einer entriegelten Stellung zu wechseln.

Eine vorteilhafte Ausgestaltung der Erfindung sieht vor, dass der Verriegelungskorb eine der Anzahl der Aufnahmenuten des Positionierkörpers entsprechende Anzahl Sperrstäbe umfasst. Hierdurch ist es möglich, je einzelne Aufnahmenut zu verriegeln oder freizugeben.

Eine vorteilhafte Ausgestaltung der Erfindung sieht vor, dass die Sperrstäbe in axialer Richtung zwischen den Positionierkörper und die Montagescheibe ragend angeordnet sind. Insgesamt wird hierüber eine kompakte und funktional integrierte Anordnung erreicht.

Weiterhin wird die Aufgabe gelöst durch ein Verfahren zum umfänglichen Positionieren einer Mehrzahl an Kupferstäben unter Verwendung der beschriebenen Positioniervorrichtung, mit den Schritten:
- Bestücken des Positionierkörpers und des Drehkörpers mit Kupferstäben;
- Verriegeln der jeweiligen in den Aufnahmenuten des Positionierkörpers aufgenommenen Schenkelabschnitten der Kupferstäbe mittels der Verriegelungsmittel;
- Drehen des Positionierkörpers und/oder des Drehkörpers relativ zueinander mittels des Drehantriebsmechanismus und
- Überführen der in den Führungsgassen aufgenommenen Schenkelabschnitten der Kupferstäbe aus den Führungsgassen des Drehkörpers in die Aufnahmenuten des Positionierkörpers.

Eine vorteilhafte Ausgestaltung des Verfahrens sieht ein Entriegeln der durch die Verriegelungsmittel verriegelten Aufnahmenuten des Positionierkörpers im Verlauf des Überführens der Schenkelabschnitte von den Führungsgassen in die Aufnahmenuten vor.

Eine vorteilhafte Ausgestaltung des Verfahrens sieht eine Entnahme der in den Aufnahmenuten des Positionierkörpers positionierten Kupferstäbe nach vollständigem Überführen der jeweiligen Schenkelabschnitte von den Führungsgassen in die Aufnahmenuten vor.

Die Erfindung wird nachfolgend mit weiteren Merkmalen, Einzelheiten und Vorteilen anhand der beigefügten Figuren erläutert. Die Figuren illustrieren dabei lediglich beispielhafte Ausführungsformen der Erfindung. Hierin zeigen
- Figur 1: ein Statorelement mit einer Mehrzahl bestückter Kupferstäbe;
- Figur 2: eine weitere Darstellung eines Statorelements gemäß Figur 1;
- Figur 3: eine erfindungsgemäße Positioniervorrichtung in einer Explosionsdarstellung;
- Figur 4: eine Positioniervorrichtung gemäß Figur 3 in einer Draufsicht;
- Figur 5: eine Positioniervorrichtung gemäß Figur 3 in einem Querschnitt;
- Figur 6: eine Detaillierung einer Positioniervorrichtung gemäß Figur 3;
- Figur 7: ein Verfahren zum Positionieren von Kupferstäben anhand der Positioniervorrichtung gemäß Figur 3;
- Figur 8: Detaillierungen des gemäß Figur 7 dargestellten Verfahrens;
- Figur 9: ein Verfahren zum Positionieren von Kupferstäben anhand einer weiteren erfindungsgemäßen Positioniervorrichtung und
- Figur 10: eine Detaillierung des gemäß Figuren 7 und 9 dargestellten Verfahrens.

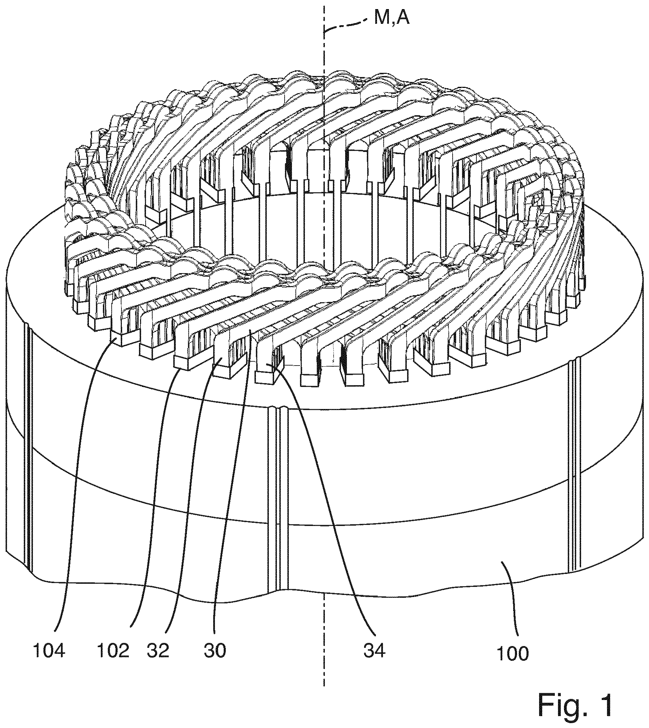

Die Figur 1 zeigt zunächst beispielhaft ein Statorelement 100 für eine elektrische Maschine beispielsweise in Gestalt eines Elektromotors. Dieses Statorelement 100 hat bereits den zuvor beschriebenen Montageprozess durchlaufen, der exemplarisch mit der strukturellen Unterteilung Vorpositionierung, Montagevorbereitung und Montagevorgang skizziert wurde. Folglich ist in umfänglich angeordneten Aufnahmenuten 102 des Statorelements 100 eine Mehrzahl an Kupferstäben 30 eingeführt. Zu erkennen ist nun, dass vorliegend vier Kupferstäbe 30 mit jeweils einem ihrer Schenkelabschnitte 32, 34 in eine Aufnahmenut 102 eingeführt sind. In jeder Aufnahmenut 30 sind die Schenkelabschnitte 32, 34 in radialer Richtung nebeneinander angeordnete. Ausgehend von den Schenkelabschnitten 32, 34 einer Aufnahmenut 102 sind die anderen Schenkelabschnitte 34, 32 jedes Kupferstabes 30 abwechselnd in entgegengesetzte Umfangsrichtung in entsprechende Aufnahmenuten 102 eingeführt. Zu erkennen ist weiterhin ein radialer Versatz zwischen den eingeführten Schenkelabschnitten 32, 34 eines Kupferstabes 30, wobei dieser radiale Versatz zu den bereits beschriebenen Überlappungen benachbarter Kupferstäbe 30 führt. Weiterhin sind die Schenkelabschnitte 32, 34, die in eine Aufnahmenut 102 eingeführt sind, gemeinsam von einer Isolation 104 umgeben.

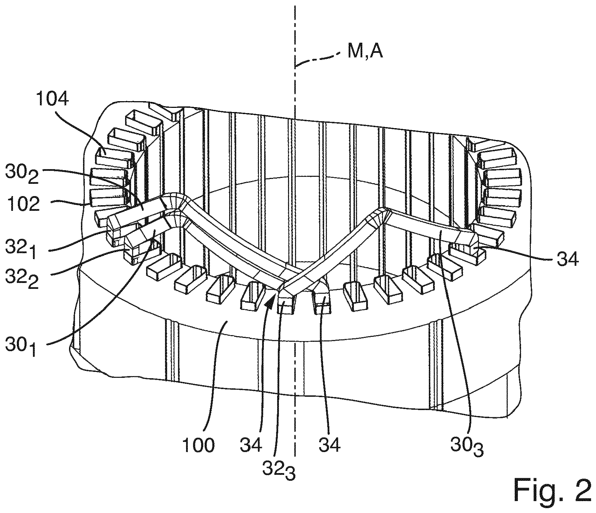

Die Figur 2 zeigt eine weitere Darstellung eines Statorelements 100, mit vorliegend nur drei eingeführten Kupferstäben 30₁, 30₂, 30₃. Zu erkennen ist, dass der jeweils linke Schenkelabschnitt 32₁, 32₂, 32₃ in der radial äußersten Position der jeweiligen Aufnahmenut 102 eingeführt ist. Demgegenüber ist der entsprechende rechte Schenkelabschnitt 34₁, 34₂, 34₃ in der radial nächst inneren Position der jeweiligen Aufnahmenut 102 eingeführt. Deutlichen zu erkennen ist demnach eine Überlappung der beiden linken Kupferstäbe 32₁ und 32₂. Somit wird hieran verdeutlicht, dass ein Einführen beispielsweise dieser beiden Kupferstäbe 32₁ und 32₂, sofern diese denn unmittelbar in einer umfänglichen Ausrichtung der Kupferstäbe erfolgen soll, sukzessive erfolgen muss und nicht zeitgleich erfolgen kann. Auch kann an der Figur 2 die Spannweite eines Kupferstabes 30 verdeutlicht werden, die nämlich der in Umfangrichtung - bezogen auf die Mittelachse A - verlaufende Abstand zwischen den jeweiligen Schenkelabschnitten 32, 34 eines jeden Kupferstabes 30 ist.

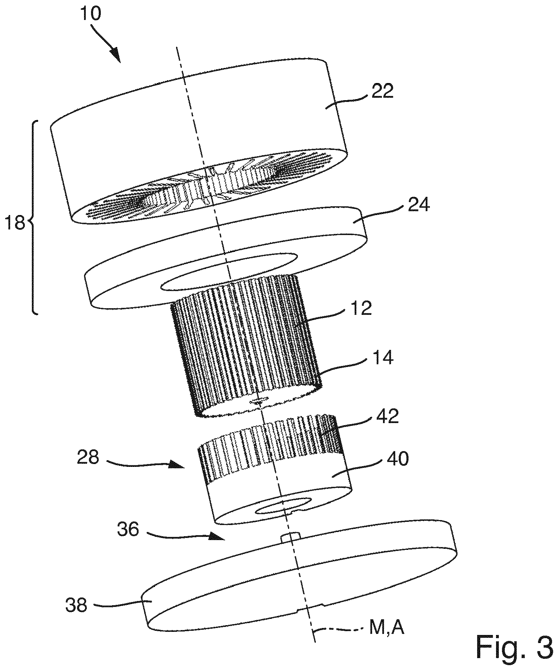

Die Figur 3 zeigt nun eine erfindungsgemäße Positioniervorrichtung 10 in einer Explosionsdarstellung. Grundsätzlich umfasst die Positioniervorrichtung 10 einen Grundkörper 38, einen Positionierkörper 12, Verriegelungsmittel 28 und einen Drehkörper 18, wobei diese Bauteile kreisförmig ausgebildet und koaxial zu der Mittelachse M angeordnet sind. Vorliegend ist vorgesehen, dass der Drehkörper 18 eine Montagescheibe 22 und eine Drehantriebsscheibe 24 umfasst, die beide ebenfalls koaxial zur Mittelachse M angeordnet sind. Wie später noch anhand einer nicht explodierten Schnittdarstellung gezeigt wird, sind der Positionierkörper 12 und die Verriegelungsmittel 28 innerhalb des Drehkörpers 18 angeordnet, wobei die Verriegelungsmittel 28 einen Verriegelungskorb 40 mit axial gerichteten und umfänglich angeordneten Sperrstäben 42 umfassen und der Verriegelungskorb 40 zumindest teilweise und die Sperrstäbe bevorzugt vollständig in einem umfänglichen Zwischenraum zwischen dem Positionierkörper 12 und dem Drehkörper 18 einsitzen.

Die Freiheitsgrade dieser Bauteile der Positioniervorrichtung 10 sind nun derart, dass die Montagescheibe 22 drehfest mit der Drehantriebsscheibe 24 verbunden ist und beide zusammen über die Drehantriebsscheibe 24 auf dem Grundkörper 38 drehbar gelagert sind. Der Positionierkörper 12 ist drehfest auf dem Grundkörper 38 gehalten, sodass infolge der Drehbarkeit der Montagescheibe 22 im Verbund mit der Drehantriebsscheibe 24 eine relative Drehung zwischen diesen und dem Positionierkörper 12 möglich ist. Die Verriegelungsmittel 28 sind drehbar gegenüber dem Grundkörper 38 gehalten, so dass die Verriegelungsmittel 28 gegenüber dem Positionierkörper 12 drehbar sind. Durch diese Drehbarkeit sind die Verriegelungsmittel 28 zwischen einer Verriegelungsstellung und einer Entriegelungsstellung bewegbar, wie später noch näher beschrieben wird.

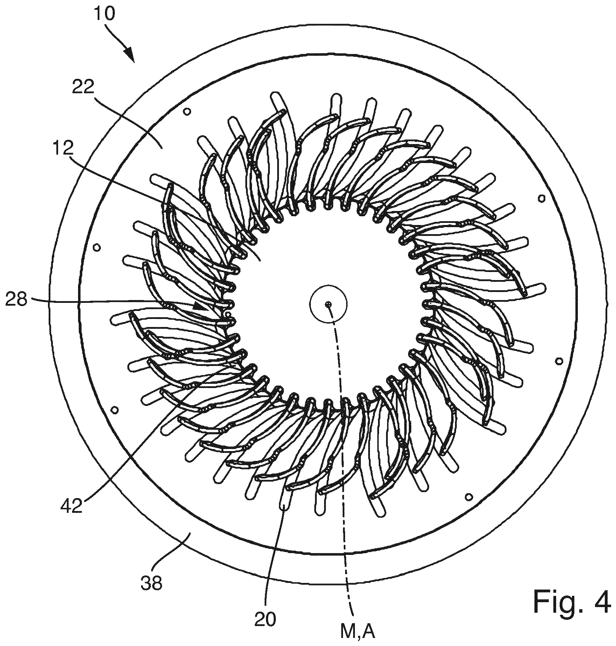

Unter zusätzlicher Bezugnahme auf die Figur 4 soll nun einerseits die Außenumfangsfläche 14 des Positionierkörpers 12 und andererseits das Innere der Montagescheibe 22 in ihren jeweiligen Beschaffenheiten beschrieben werden. Die Figur 4 zeigt eine Draufsicht in Axialrichtung durch einen Zusammenbau einer Positioniervorrichtung 10. Von außen nach innen betrachtet sind der Grundkörper 38 und die Montagescheibe 22, die Verriegelungsmittel 28 und der Positionierkörper 12 dargestellt. Zu erkennen ist, dass die Montagescheibe 22 umfänglich von radial außen nach innen in Richtung der Mittelachse A offene Führungsgassen 20 aufweist. Diese Führungsgassen 20 können bedarfsweise eine unterschiedliche oder auch gleiche radiale Länge habe oder auch in Richtung der Mittelachse A bogenförmig beziehungsweise sichelförmig verlaufen. Jedenfalls sind die Führungsgassen 20 nach innen in Richtung der Mittelachse A offen. Bevorzugt verlaufen die Führungsgassen 20 in einer Axialrichtung - d.h. senkrecht zur Zeichenebene - vollständig durch die Montagescheibe 22 mit gleichbleibender umfänglicher Breite durch. Unter Zuhilfenahme der Darstellung der Figur 3 ist nun allerdings zu erkennen, dass die Führungsgassen 20 in Axialrichtung, hin zu dem Grundkörper 38, von der Drehantriebscheibe 24 abgedeckt beziehungsweise verschlossen werden. Zur anderen Seite bleiben die Führungsgassen 20 offen, um sie mit Kupferstäben 30 bestücken zu können.

In einer noch zu beschreibenden funktionalen Hinsicht bildet der Positionierkörper 12 auf einer Außenumfangsfläche 14 zu den Führungsgassen 20 der Montagescheibe korrespondierende und in Axialrichtung verlaufende Aufnahmenuten 16 aus. Bevorzugt entspricht die Anzahl der Führungsgassen 20 der Anzahl der Aufnahmenuten 16. In dem umfänglichen Zwischenraum zwischen der Montagescheibe 22 und dem Positionierkörper 12 sitzen die Verriegelungsmittel 28 ein, wobei in der Ansicht der Figur 4 insbesondere die Sperrstäbe 42 zu erkennen sind.

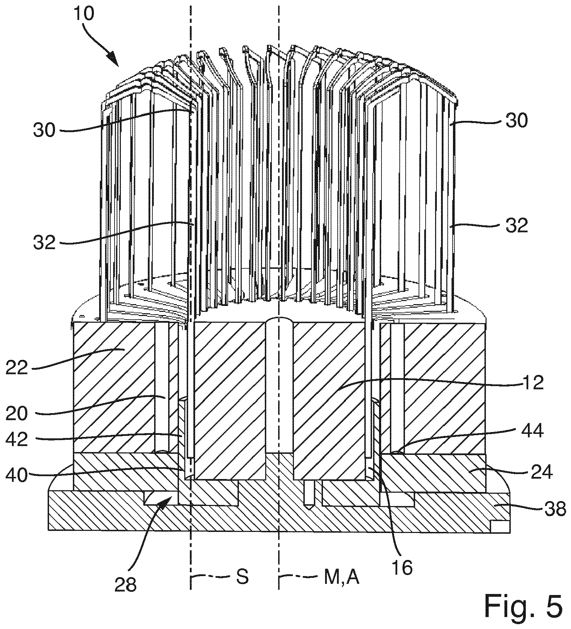

Die Figur 5 zeigt einen Querschnitt entlang der Mittelachse M durch einen Zusammenbau einer Positioniervorrichtung 10. Zu erkennen ist, dass sich die Sperrstäbe 42 der Verriegelungsmittel 28 bezüglich der Aufnahmenuten 16 des Positionierkörpers 12 in der Verriegelungsstellung, indem nämlich die Sperrstäbe 42 die Aufnahmenuten 16 überdecken beziehungsweise verriegeln. Durch diese Verriegelung der Aufnahmenuten 16 des Positionierkörper 12 ist gewährleistet, dass der jeweiligen Schenkelabschnitt 32 des Kupferstabes 30, mit dem die Positioniervorrichtung 10 bestückt ist, in der Aufnahmenut 16 um eine Schwenkachse S drehbar aber im Übrigen nicht radial verlierbar gehalten wird. Die Figuren und 3 und 5 lassen erkennen, dass die Aufnahmenuten 16 des Positionierkörpers 12 über die gesamte axiale Höhe des Positionierkörpers 12 verlaufen können. Im Vergleich hierzu haben die Führungsgassen 28 des Montagekörpers 22 eine geringere axiale Höhe als die Aufnahmenuten 16, wobei die Führungsgassen 28 über ihren radialen Verlauf in Richtung des Grundkörpers 38 von der Drehantriebsscheibe 38 verschlossen werden und zumindest ein Teil der axialen Höhe der Drehantriebsscheibe 38 ebenfalls die Aufnahmenuten 16 umschließt.

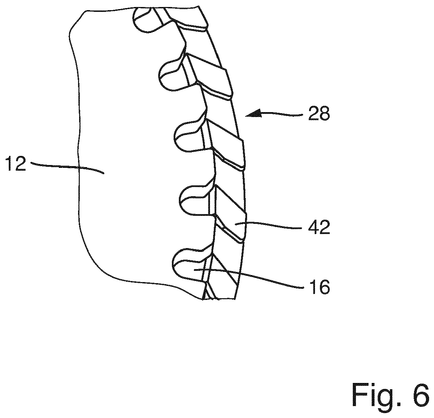

Die Figur 6 zeigt zur Verdeutlichung der Verrieglung der Aufnahmenuten 16 eine Detaillierung. Ein Axialschnitt zeigt den Positionierkörper 12 mit den Aufnahmenuten 16 und die Verriegelungsmittel 28 mit den umfänglich angeordneten Sperrstäben 42. Die Sperrstäbe 42 befinden sich in der Verriegelungsstellung, so dass sie vor den Aufnahmenuten 16 liegen und diese verriegeln. Werden die Sperrstäbe 42 in die Entriegelungsstellung verdreht, geben sie die Aufnahmenuten frei und liegen vor den Stegen zwischen den Aufnahmenuten 16.

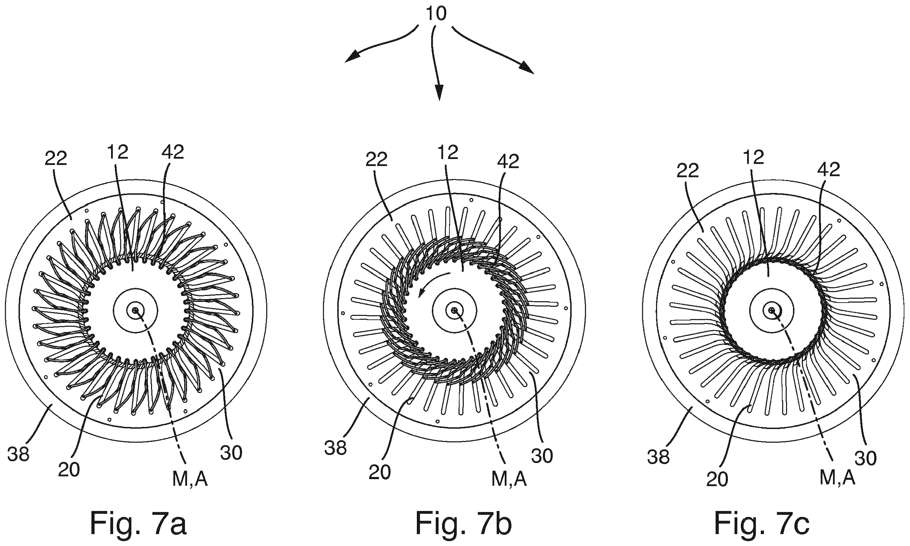

Die Abfolge a) bis c) der Figur 7 zeigt ein Verfahren zum umfänglichen Positionieren einer Mehrzahl an Kupferstäben 30 unter Verwendung einer erfindungsgemäßen Positioniervorrichtung 10. Der Darstellung der Figur 7a) ist ein Bestücken der Positioniervorrichtung 10 mit Kupferstäben 30 von axial oben vorausgegangen und zwar manuell oder mit einem geeigneten Handhabungsgerät. Die Kupferstäbe 30 haben vorliegend eine gleiche Spannweite. Jeder Kupferstab 30 ist mit dem einen Schenkelabschnitt 32, vorliegend der innere der beiden Schenkelabschnitt 32, 34, in eine Aufnahmenut 16 des Positionierkörpers 12 und mit dem anderen Schenkelabschnitt 34, vorliegend der äußere der beiden Schenkelabschnitte 34, 32, in eine Führungsgasse 20 der Montagescheibe 22 eingeführt. Die Aufnahmenuten 16 sind über die Verriegelungsmittel 28 verriegelt, wie im Zusammenhang mit der Figur 6 beschrieben wurde. Jeder Kupferstab 20 ist so weit in die Aufnahmenut 16 beziehungsweise die Führungsgasse 20 eingeführt, bis der äußere Schenkelabschnitt 34 mit einer Anlagefläche 44 der Drehantriebsscheibe 24 in Kontakt und zur Anlage kommt. Die axiale Position der Kupferstäbe 30 bezüglich der Positioniervorrichtung 10 in dem Ausgangszustand des Verfahrens wird demnach bestimmt durch die Anlage der äußeren Schenkelabschnitte 34 auf der Anlagefläche 44 der Drehantriebsscheibe 24. Die Draufsicht der Figur 7a) lässt weiterhin erkennen, dass alle Kupferstäbe 30 ohne Überlappung zueinander in die Positioniervorrichtung 10 eingeführt sind. Die Kupferstäbe 30 sind in diesem Verfahrensstadium im Wesentlich radial bezüglich der Mittelachse M angeordnet.

Eine Positionierung der Kupferstäbe 30 in eine umfängliche Anordnung bezüglich der Mittelachse M wird eingeleitet, indem eine relative Drehung zwischen dem Positionierkörper 12 und der Montagescheibe 22 eingeleitet wird. Hierbei kann beispielsweise vorgesehen sein, dass der Positionierkörper 12 bezüglich der Montagescheibe 22 im Gegenuhrzeigersinn gedreht wird. Alternativ ist es möglich, dass die Montagescheibe 22 bezüglich des Positionierkörpers 12 im Uhrzeigersinn gedreht wird. Schließlich ist auch denkbar, dass sowohl der Positionierkörper 12 als auch die Montagescheibe 22 in den soeben angegebenen Drehrichtungen gedreht werden. Jedenfalls ist vorgesehen, dass während die Phase der Positionierung der Verriegelungskorb 40 mit den Sperrstäben 42 keine relative Drehung bezüglich des Positionierkörpers 12 ausführt, um die Verriegelung der inneren Schenkelabschnitte 32 beizubehalten. Da die inneren Schenkelabschnitte 32 unverlierbar aber schwenkbar in den Aufnahmenuten 16 des Positionierkörpers 12 gehalten sind und die äußeren Schenkelabschnitte 34 entlang der Führungsgassen 20 beweglich sind, werden die äußeren Schenkelabschnitte 34 von den Führungsgassen 20 derart geführt, dass sie in den Führungsgassen 20 nach innen gleiten und dabei über den Verbindungssteg den inneren Schenkelabschnitt 32 in den Aufnahmenuten 16 verschwenken. Durch Drehung des Positionierkörpers 12 gegenüber der Montagescheibe 22 wird folglich der äußere Schenkelabschnitt 34 dem Positionierkörper 12 und den Aufnahmenuten 16 angenähert, ohne dass die inneren Schenkelabschnitte 34 ihre in den Aufnahmenuten 16 schwenkbare und unverlierbare Position ändern.

Eine Zwischenstellung zeigt die Figur 7b), in der die äußeren Schenkelabschnitte 34 bereits ein Stück in Richtung des Positionierkörpers 12 durch Drehung desselben bewegt wurden.

Eine Endstellung zeigt die Figur 7c), in der die äußeren Schenkelabschnitte 34 ebenfalls vollständig in die Ausnahmenuten 16 des Positionierkörpers 12 überführt wurden. Hierfür sind kurz bevor die äußeren Schenkelabschnitte 34 die Führungsgassen 20 verlassen, die Verriegelungsmittel 28 von der Verriegelungsstellung in die Entriegelungsstellung verdreht worden, so dass die Aufnahmenuten 16 freigegeben sind, um die äußeren Schenkelabschnitte 34 aufnehmen zu können.

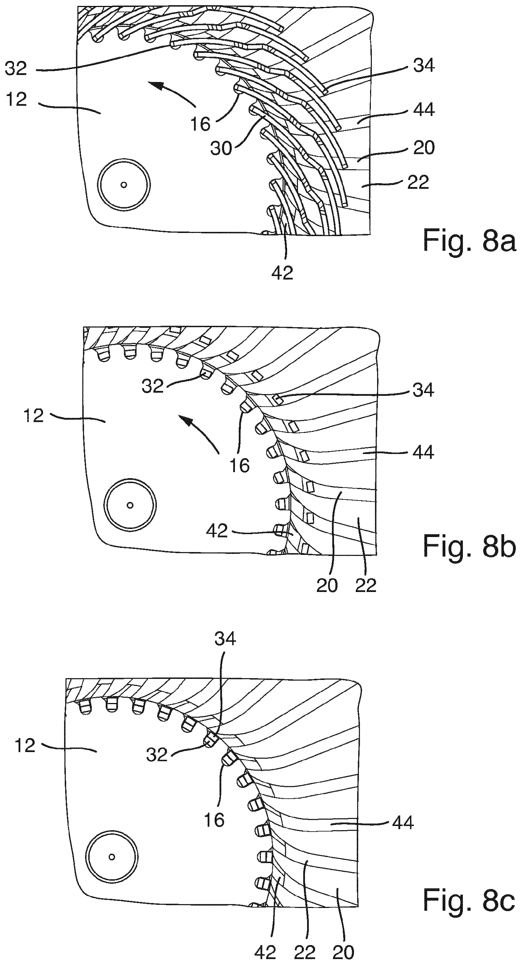

Die Figuren 8a) bis 8c) zeigen Detaillierungen des anhand der Figuren 7a) bis 7c) beschriebenen Verfahrens. Die Figur 8a) zeigt den als Zwischenstellung bezeichneten Zustand. Die Verriegelungsmittel 28 befinden sich weiterhin in der Verriegelungsstellung, so dass die inneren Schenkelabschnitte 32 schwenkbar sind aber nicht aus den Aufnahmenuten 16 verlierbar sind. Die Figur 8b) zeigt einen Zustand kurz bevor die äußeren Schenkelabschnitte 34 die Führungsgasse 20 verlassen und in die Aufnahmenuten 16 überführt werden. In diesem Zustand werden die Verriegelungsmittel 28 in den Entriegelungsstellung überführt, um die Aufnahmenuten 16 für die Aufnahme der äußeren Schenkelabschnitte 34 freizugeben. Ausgehend von dem in Figur 8b) gezeigten Zustand erfolgt eine weitere Drehung des Positionierkörpers 12, sodass schließlich die in Figur 8c) gezeigte Endstellung erreicht wird, in der die Kupferstäbe 30 mit ihren beiden Schenkelabschnitten 32, 34 in den Aufnahmenuten 16 aufgenommen sind. Bei dem Übergang von der Zwischenstellung in die Endstellung gleiten die äußeren Schenkelabschnitte 34 von der Anlagefläche 44 auf der Drehantriebsscheibe 24 ab, so dass die Kupferstäbe 30 mit beiden Schenkelabschnitten 32, 34 in axialer Richtung weiter in die Positioniervorrichtung gleiten und in den Aufnahmenuten 16 ihre jeweilige Endstellung sowohl in axialer als auch radialer Richtung einnehmen. Entscheidend ist, dass in der Endstellung in jeder Aufnahmenut 16 ein innerer Schenkelabschnitt 32 und eine äußerer Schenkelabschnitt 34 zweier unterschiedlicher Kupferstäbe 30 aufgenommen sind. Schließlich können die in ihrer Endstellung positionierten Kupferstäbe als Einheit aus der Positioniervorrichtung 10 entnommen werden, beispielsweise durch eine geeignete Greifervorrichtung, und dem nächsten Schritt in dem Montageprozess zugeführt werden.

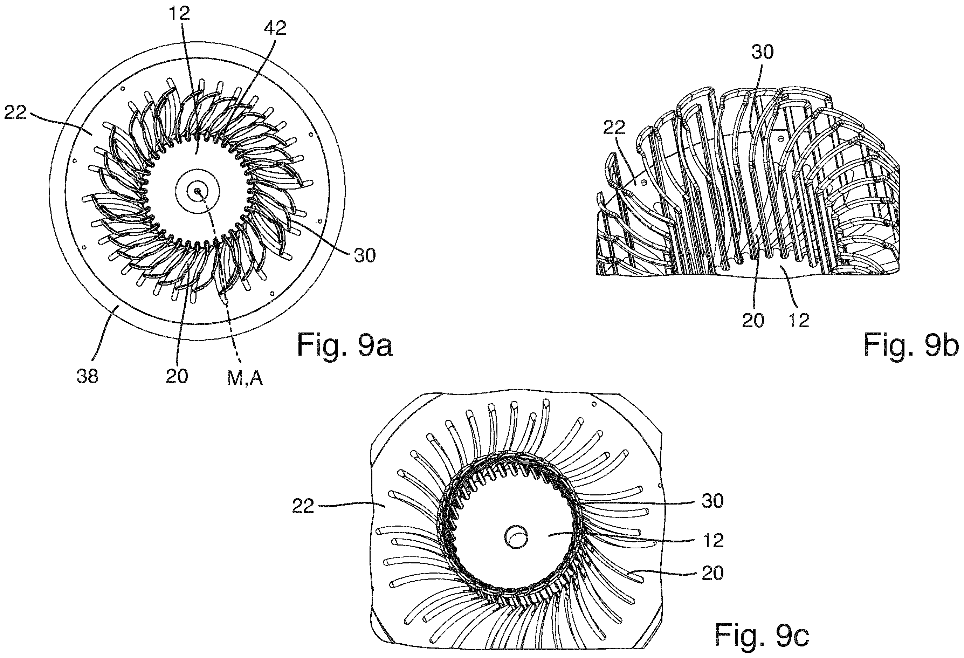

Die Figur 9 zeigt schließlich eine Positioniervorrichtung 10 zum Positionieren von Kupferstäben 30 mit unterschiedlicher Spannweite. Zu erkennen ist, dass die Führungsgassen 20 in der Montagescheibe 22 mit einer angepassten Länge und einem angepassten Winkel ausgebildet sind.

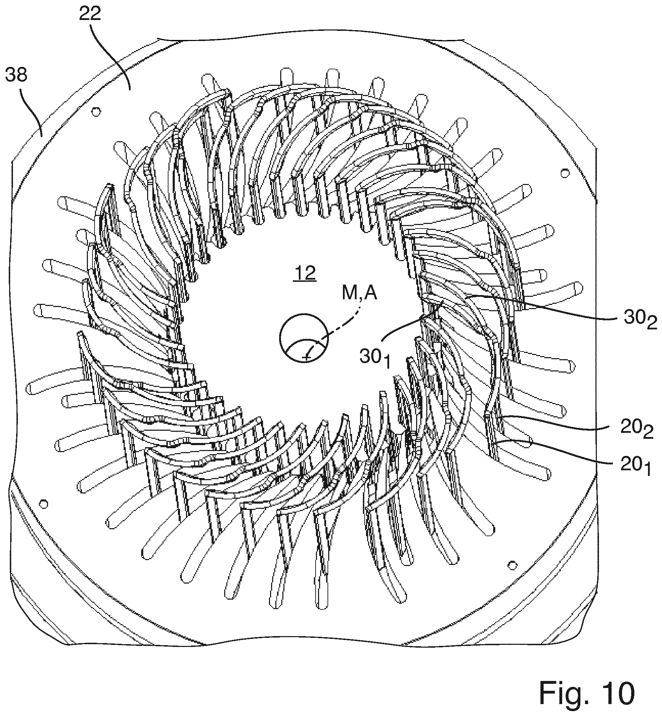

Anhand der Figur 10 wird noch einmal dargestellt, dass es während der Drehbewegung der Positioniervorrichtung 10 von dem Ausgangszustand - vergleiche Figur 7a) - in die Endstellung - vergleiche Figur 7c) - fortschreitend zu einer Überlappung benachbarter Kupferstäbe 30 kommt. Betrachtet man beispielsweise die Führungsgassen 20₁ und 20₂ und die entsprechenden in diesen aufgenommenen Kupferstäbe 30₁ und 30₂ in Axialrichtung A, so erkennt man, dass bei diesen Kupferstäben 30₁ und 30₂ bereits eine Überlappung eingetreten ist. Bei weiterer Drehung in die Endstellung überlappen sich zunehmend mehr benachbarte Kupferstäbe 30. Mit der erfindungsgemäßen Positioniervorrichtung 10 ist es somit möglich, die Vorrichtung in dem Ausgangszustand mit allen Kupferstäben 30 in einer aufgefächerten beziehungsweise radial gerichteten Stellung weitestgehend gleichzeitig zu bestücken und anschließend durch die Drehbewegung die Kupferstäbe 30 in die Endstellung zu überführen, in der sich zumindest benachbarte Kupferstäbe 30 in Axialrichtung A betrachtet überlappen. Mit der erfindungsgemäßen Positioniervorrichtung 10 kann demnach vermieden werden, bereits in Endstellung eingeführte Kupferstäbe zumindest ein gewisses Stück wieder heraus ziehen zu müssen, um einen benachbarten, in der Endstellung überlappenden weiteren Kupferstab einzuführen, wie herkömmliche Montageprozesse dies vorsehen.

### Bezugszeichenliste

- 10: Positioniervorrichtung
- 12: Positionierkörper
- 14: Außenumfangsfläche
- 16: Aufnahmenut
- 18: Drehkörper
- 20: Führungsgasse
- 22: Montagescheibe
- 24: Drehantriebsscheibe
- 26: Anlagefläche
- 28: Verriegelungsmittel
- 30: Kupferstab
- 32: Schenkelabschnitt
- 34: Schenkelabschnitt
- 36: Drehantriebsmechanismus
- 38: Grundkörper
- 40: Verriegelungskorb
- 42: Sperrstab
- 44: Anlagefläche
- 100: Statorelement
- 102: Aufnahmenut
- 104: Isolation
- M: Mittelachse
- A: Axialrichtung
- S: Schwenkachse

## Patentansprüche

1. Positioniervorrichtung (10) zum umfänglichen Positionieren einer Mehrzahl an Kupferstäben (30) um eine Mittelachse M, die eine Axialrichtung A beschreibt, wobei die Kupferstäbe (30) im Wesentlichen U-förmig mit einem ersten Schenkelabschnitt (32) und einem zweiten Schenkelabschnitt (34) ausgeformt sind, umfassend
einen Positionierkörper (12), der mit einer Außenumfangsfläche (14) konzentrisch um die Mittelachse M angeordnet ist,
einen Drehkörper (18), der koaxial um den Positionierkörper (12) drehbar angeordnet ist, wobei der Positionierkörper (12) auf der Außenumfangsfläche (14) in Axialrichtung verlaufende Aufnahmenuten (16) zur jeweiligen Aufnahme eines der Schenkelabschnitte (32, 34) eines Kupferstabes (30) ausbildet und
der Drehkörper (18) nach innen in Richtung der Mittelachse A offene Führungsgassen (20) zur Aufnahme des anderen Schenkelabschnittes (34, 32) des jeweiligen Kupferstabes (30) ausbildet,
wobei Verriegelungsmittel (28) vorgesehen sind, um den Schenkelabschnitt (32, 34) des Kupferstabes um eine zur Mittelachse M parallele Schwenkachse S schwenkbar in der jeweiligen Aufnahmenut (16) des Positionierkörpers (12) zu halten, **dadurch gekennzeichnet, dass**
ein Drehantriebsmechanismus (36) zum Aufprägen einer Drehung auf den Drehkörper (18) relativ zum Positionierkörper (12) vorgesehen ist, um durch Drehung des Drehkörpers (18) die in den Führungsgassen (20) des Drehkörpers (18) aufgenommenen Schenkelabschnitte (34, 32) nach Innen in Richtung der Mittelachse M in die Aufnahmenuten (16) des Positionierkörpers (12) zu schwenken.

2. Positioniervorrichtung (10) nach Anspruch 1, **dadurch gekennzeichnet, dass** die Führungsgassen (20) zu einer axialen Seite des Drehkörpers (18) geschlossen sind.

3. Positioniervorrichtung (10) nach Anspruch 1 oder 2, **dadurch gekennzeichnet, dass** der Drehkörper (18) eine Montagescheibe (22) und eine Drehantriebsscheibe (24) umfasst, wobei die Führungsgassen (20) in der Montagescheibe (22) ausgebildet sind.

4. Positioniervorrichtung (10) nach Anspruch 3, **dadurch gekennzeichnet, dass** die Montagescheibe (22) und die Drehantriebsscheibe (24) konzentrisch und axial benachbart zueinander angeordnet sind.

5. Positioniervorrichtung (10) nach Anspruch 3 oder 4, **dadurch gekennzeichnet, dass** eine der Montagescheibe (22) zugewandte axiale Stirnseite der Drehantriebsscheibe (24) eine axiale Anlagefläche (26) für die in den Führungsgassen (20) der Montagescheibe (22) aufgenommenen Schenkelabschnitte (32, 34) der Kupferstäbe (30) ausbildet.

6. Positioniervorrichtung (10) nach Anspruch 3 bis 5, **dadurch gekennzeichnet, dass** der Drehkörper (18) über die Drehantriebsscheibe (24) auf einem Grundkörper (38) der Positioniervorrichtung (10) drehbar gehalten ist.

7. Positioniervorrichtung (10) nach einem der Ansprüche 3 bis 6, **dadurch gekennzeichnet, dass** die Verriegelungsmittel (28) einen gegenüber dem Grundkörper (38) und der Drehantriebsscheibe (24) drehbar gelagerten Verriegelungskorb (40) mit axial gerichteten Sperrstäben (42) umfassen.

8. Positioniervorrichtung (10) nach Anspruch 7, **dadurch gekennzeichnet, dass** der Verriegelungskorb (40) eine der Anzahl der Aufnahmenuten (16) des Positionierkörpers (12) entsprechende Anzahl Sperrstäbe (42) umfasst.

9. Positioniervorrichtung (10) nach Anspruch 7 oder 8, **dadurch gekennzeichnet, dass** die Sperrstäbe (42) in axialer Richtung zwischen den Positionierkörper (12) und die Montagescheibe (22) ragend angeordnet sind.

10. Verfahren zum umfänglichen Positionieren einer Mehrzahl an Kupferstäben (30) unter Verwendung der Positioniervorrichtung (10) nach einem der Ansprüche 1 bis 9, mit den Schritten:
- Bestücken des Positionierkörpers (12) und des Drehkörpers (18) mit Kupferstäben (30);
- Verriegeln der jeweiligen in den Aufnahmenuten (16) des Positionierkörpers (12) aufgenommenen Schenkelabschnitten (32, 34) der Kupferstäbe (30) mittels der Verriegelungsmittel (28);
- Drehen des Positionierkörpers (12) und/oder des Drehkörpers (18) relativ zueinander mittels des Drehantriebsmechanismus (36) und dem kennzeichnenden Schritt
- Überführen der in den Führungsgassen (20) aufgenommenen Schenkelabschnitten (34, 32) der Kupferstäbe (30) aus den Führungsgassen (20) des Drehkörpers (18) in die Aufnahmenuten (16) des Positionierkörpers (12).

11. Verfahren nach Anspruch 10, **gekennzeichnet durch**
- Entriegeln der durch die Verriegelungsmittel (28) verriegelten Aufnahmenuten (16) des Positionierkörpers (12) im Verlauf des Überführens der Schenkelabschnitte (34, 32) von den Führungsgassen (20) in die Aufnahmenuten (16).

12. Verfahren nach Anspruch 10 oder 11, **gekennzeichnet durch**
- Entnahme der in den Aufnahmenuten (16) des Positionierkörpers (12) positionierten Kupferstäbe (30) nach vollständigem Überführen der jeweiligen Schenkelabschnitte (34, 32) von den Führungsgassen (20) in die Aufnahmenuten (16).

## Claims

1. Positioning device (10) for the peripheral positioning of a plurality of copper rods (30) about a center axis M which describes an axial direction A, wherein the copper rods (30) are of substantially U-shaped configuration, having a first leg portion (32) and a second leg portion (34), said positioning device comprising
a positioning body (12), which is arranged with an outer peripheral surface (14) concentrically about the center axis M,
a rotary body (18), which is arranged such that it is rotatable coaxially about the positioning body (12), wherein the positioning body (12) forms on the outer peripheral surface (14) axially running receiving grooves (16) for respectively receiving one of the leg portions (32, 34) of a copper rod (30), and
the rotary body (18) forms guide channels (20), which are open inwardly in the direction of the center axis A, for receiving the other leg portion (34, 32) of the respective copper rod (30),
wherein locking means (28) are provided, in order to hold the leg portion (32, 34) of the copper rod, pivotably about a pivot axis S parallel to the center axis M, in the respective receiving groove (16) of the positioning body (12), **characterized in that** a rotary drive mechanism (36) for imparting a rotation to the rotary body (18) relative to the positioning body (12) is provided, in order to pivot, by rotation of the rotary body (18), the leg portions (34, 32) accommodated in the guide channels (20) of the rotary body (18) inwardly in the direction of the center axis M into the receiving grooves (16) of the positioning body (12).

2. Positioning device (10) according to Claim 1, **characterized in that** the guide channels (20) are closed to an axial side of the rotary body (18).

3. Positioning device (10) according to Claim 1 or 2, **characterized in that** the rotary body (18) comprises a mounting disk (22) and a rotary drive disk (24), wherein the guide channels (20) are configured in the mounting disk (22).

4. Positioning device (10) according to Claim 3, **characterized in that** the mounting disk (22) and the rotary drive disk (24) are arranged concentrically and axially adjacent to each other.

5. Positioning device (10) according to Claim 3 or 4, **characterized in that** an axial end face, facing toward the mounting disk (22), of the rotary drive disk (24) forms an axial contact surface (26) for the leg portions (32, 34), accommodated in the guide channels (20) of the mounting disk (22), of the copper rods (30) .

6. Positioning device (10) according to Claim 3 to 5, **characterized in that** the rotary body (18) is held rotatably, by means of the rotary drive disk (24), on a main body (38) of the positioning device (10).

7. Positioning device (10) according to one of Claims 3 to 6, **characterized in that** the locking means (28) comprise a locking cage (40) having axially directed stop bars (42), which locking cage is mounted rotatably in relation to the main body (38) and the rotary drive disk (24).

8. Positioning device (10) according to Claim 7, **characterized in that** the locking cage (40) comprises a number of stop bars (42) which corresponds to the number of receiving grooves (16) of the positioning body (12).

9. Positioning device (10) according to Claim 7 or 8, **characterized in that** the stop bars (42) are arranged projecting in the axial direction between the positioning body (12) and the mounting disk (22).

10. Method for the peripheral positioning of a plurality of copper rods (30), using the positioning device (10) according to one of Claims 1 to 9, comprising the steps:
- loading of the positioning body (12) and the rotary body (18) with copper rods (30);
- locking of the respective leg portions (32, 34), accommodated in the receiving grooves (16) of the positioning body (12), of the copper rods (30) by means of the locking means (28);
- rotation of the positioning body (12) and/or the rotary body (18) relative to each other by means of the rotary drive mechanism (36),
and comprising the characterizing step:
transferal of the leg portions (34, 32), accommodated in the guide channels (20), of the copper rods (30) out of the guide channels (20) of the rotary body (18) into the receiving grooves (16) of the positioning body (12) .

11. Method according to Claim 10, **characterized by** unlocking of the receiving grooves (16), locked by the locking means (28), of the positioning body (12) in the course of the transferal of the leg portions (34, 32) from the guide channels (20) into the receiving grooves (16) .

12. Method according to Claim 10 or 11, **characterized by**
- removal of the copper rods (30) positioned in the receiving grooves (16) of the positioning body (12), following complete transferal of the respective leg portions (34, 32) from the guide channels (20) into the receiving grooves (16).

## Revendications

1. Dispositif de positionnement (10) pour positionner en périphérie une multiplicité de barres de cuivre (30) autour d'un axe central M, qui décrit une direction axiale A, dans lequel les barres de cuivre (30) sont réalisées essentiellement en forme de U avec une première partie de branche (32) et une seconde partie de branche (34), comprenant
un corps de positionnement (12), qui est disposé avec une face périphérique extérieure (14) de façon concentrique autour de l'axe central M,
un corps tournant (18), qui est disposé de façon rotative autour du corps de positionnement (12), dans lequel le corps de positionnement (12) forme sur la face périphérique extérieure (14) des rainures de réception (16) s'étendant en direction axiale pour la réception respective d'une des parties de branche (32, 34) d'une barre de cuivre (30) et
le corps tournant (18) forme des voies de guidage (20) ouvertes vers l'intérieur en direction de l'axe central A afin de recevoir l'autre partie de branche (34, 32) de la barre de cuivre respective (30),
dans lequel il est prévu des moyens de verrouillage (28), destinés à maintenir la partie de branche (32, 34) de la barre de cuivre de façon pivotante autour d'un axe de pivotement S parallèle à l'axe central M dans la rainure de réception respective (16) du corps de positionnement (12),
**caractérisé en ce qu'**il est prévu un mécanisme d'entraînement en rotation (36) destiné à imprimer une rotation au corps tournant (18) par rapport au corps de positionnement (12), afin de faire pivoter par la rotation du corps tournant (18) les parties de branche (34, 32) logées dans les voies de guidage (20) du corps tournant (18) vers l'intérieur en direction de l'axe central M dans les rainures de réception (16) du corps de positionnement (12).

2. Dispositif de positionnement (10) selon la revendication 1, **caractérisé en ce que** les voies de guidage (20) sont fermées vers un côté axial du corps tournant (18).

3. Dispositif de positionnement (10) selon la revendication 1 ou 2, **caractérisé en ce que** le corps tournant (18) comprend un disque de montage (22) et un disque d'entraînement en rotation (24), dans lequel les voies de guidage (20) sont formées dans le disque de montage (22).

4. Dispositif de positionnement (10) selon la revendication 3, **caractérisé en ce que** le disque de montage (22) et le disque d'entraînement en rotation (24) sont disposés de façon concentrique et axialement à proximité l'un de l'autre.

5. Dispositif (10) selon la revendication 3 ou 4, **caractérisé en ce qu'**un côté frontal axial du disque d'entraînement en rotation (24) tourné vers le disque de montage (22) forme une face d'appui axiale (26) pour les parties de branche (32, 34) des barres de cuivre (30) logées dans les voies de guidage (20) du disque de montage (22) .

6. Dispositif de positionnement (10) selon une revendication 3 à 5, **caractérisé en ce que** le corps tournant (18) est maintenu de façon rotative par le disque d'entraînement en rotation (24) sur un corps de base (38) du dispositif de positionnement (10).

7. Dispositif de positionnement (10) selon l'une quelconque des revendications 3 à 6, **caractérisé en ce que** les moyens de verrouillage (28) comprennent un panier de verrouillage (40) doté de barres de blocage orientées axialement (42) monté de façon rotative par rapport au corps de base (38) et au disque d'entraînement en rotation (24).

8. Dispositif de positionnement (10) selon la revendication 7, **caractérisé en ce que** le panier de verrouillage (40) comprend un nombre de barres de blocage (42) correspondant au nombre des rainures de réception (16) du corps de positionnement (12).

9. Dispositif de positionnement (10) selon la revendication 7 ou 8, **caractérisé en ce que** les barres de blocage (42) sont disposées de façon saillante en direction axiale entre le corps de positionnement (12) et le disque de montage (22).

10. Procédé pour positionner en périphérie une multiplicité de barres de cuivre (30) en utilisant le dispositif de positionnement (10) selon l'une quelconque des revendications 1 à 9, comprenant les étapes suivantes:
- garnir le corps de positionnement (12) et le corps tournant (18) de barres de cuivre (30);
- verrouiller les parties de branche respectives (32, 34) des barres de cuivre (30) logées dans les rainures de réception (16) du corps de positionnement (12), au moyen des moyens de verrouillage (28);
- faire tourner le corps de positionnement (12) et/ou le corps tournant (18) l'un par rapport à l'autre au moyen du mécanisme d'entraînement en rotation (36) et
l'étape caractéristique suivante:
- transférer les parties de branche (34, 32) des barres de cuivre (30) logées dans les voies de guidage (20) des voies de guidage (20) du corps tournant (18) dans les rainures de réception (16) du corps de positionnement (12).

11. Procédé selon la revendication 10, **caractérisé par** l'étape suivante:
- déverrouiller les rainures de réception (16) du corps de positionnement (12) verrouillées par les moyens de verrouillage (28) au cours du transfert des parties de branche (34, 32) des voies de guidage (20) dans les rainures de réception (16).

12. Procédé selon la revendication 10 ou 11, **caractérisé par** l'étape suivante:
- enlever les barres de cuivre (30) positionnées dans les rainures de réception (16) du corps de positionnement (12) après le transfert complet des parties de branche respectives (34, 32) des voies de guidage (20) dans les rainures de réception (16).
